# EUROPÄISCHE PATENTSCHRIFT

(11) **EP 2 489 273 B1**
(45) Veröffentlichungstag und Bekanntmachung des Hinweises auf die Patenterteilung: **05.10.2016**
(21) Anmeldenummer: 11154685.9
(22) Anmeldetag: 16.02.2011
(51) Int. Cl.: A22C 11/02, B65G 65/23

(54) **Vorrichtung und Verfahren zum Beschicken einer Lebensmittel verarbeitenden Maschine, insbesondere einer Füllmaschine oder einem Kutter mit Lebensmitteln**
Device and method for coating a food processing machine, particularly a filling machine or a cutter with foodstuffs
Dispositif et procédé d'alimentation d'une machine traitant des produits alimentaires, notamment d'une machine de remplissage ou d'un dispositif de coupe à l'aide de produits alimentaires

(43) Veröffentlichungstag der Anmeldung: 22.08.2012
(60) Teilanmeldung: 16183037.7
(73) Patentinhaber: Albert Handtmann Maschinenfabrik GmbH & Co. KG, 88400 Biberach (DE)
(72) Erfinder: Maile, Bernd, 88422 Oggelshausen (DE)
(74) Vertreter: Grünecker Patent- und Rechtsanwälte PartG mbB

(56) Entgegenhaltungen:
- EP-A1- 1 402 782
- EP-A1- 2 062 478
- DE-A1- 2 421 837
- US-A1- 2005 220 580

## Beschreibung

Die Erfindung betrifft eine Vorrichtung und ein Verfahren zum Beschicken von einer Lebensmittel verarbeitenden Maschine, insbesondere einer Füllmaschine oder einem Kutter.

Eine solche Vorrichtung und ein solches Verfahren sind bereits aus der EP 2062478 A1 bekannt. Aus der DE 2421837 A1 ist bereits bekannt, mit Weintrauben befüllte Behälter nach dem Wiegen von Elektrozügen hochzuheben und dann in einen Behälter zu kippen.

In der Nahrungsmittelindustrie werden zur Beschickung von Lebensmittel verarbeitenden Maschinen, beispielsweise Vakuumfüllmaschinen oder Kutter, Hebeeinrichtungen eingesetzt. Diese Hebeeinrichtungen sind üblicherweise als Armhebeeinrichtungen oder aber als Masthebeeinrichtungen realisiert und können an eine Maschine, beispielsweise eine Vakuumfüllmaschine oder einen Kutter, angebaut werden oder aber als eigenständige Einheit ("Stand-Alone-Einheit") aufgeführt werden. Diese Hebeeinrichtungen sind ausgelegt zur Aufnahme von zum Teil standardisierten Behältern, beispielsweise fahrbaren (d.h. mit Rollen versehenen) Brätwagen. Dabei wird der Brätwagen typischerweise derart in die Aufnahmeeinheit der Hebeeinrichtung verbracht, dass er sicher gegen Herausfallen verriegelt ist und mit der Hebeeinrichtung beispielsweise nach oben über den Fülltrichter einer Vakuumfüllmaschine verbracht wird. Dort wird der Brätwagen dann in den Fülltrichter entleert. Anschließend wird der Brätwagen mit der Hebeeinrichtung wieder zurück in die Ausgangsposition gebracht und vom Bediener durch Lösen der Verriegelung an der Hebeeinrichtung wieder entnommen. Bei der Beschickung von Kuttern wird entsprechend die Kutterschüssel beschickt.

Die Aufwärtsbewegung der Armhebeeinrichtung kann dabei mit der Einkippbewegung überlagert ausgeführt sein. Die Aufwärtsbewegung der Hebeeinrichtung und damit die Bewegung des Brätwagens erfolgt dabei ebenso wie die Abwärtsbewegung mit, abgesehen von unbeabsichtigt wirkenden Einflussfaktoren (z.B. Schwingungen), nahezu konstanter Hub- bzw. Absenkgeschwindigkeit.

Meist weisen die Hebeeinrichtungen einen hydraulischen Antrieb auf. Dabei läuft der Antrieb, (d.h. z.B. die Hydraulikpumpe) mit einer so hohen Leistung, so dass eine maximal notwendige Hubkraft (z.B. > 3000 N) bereitgestellt wird, die größer ist als die maximale Hublast, die einer maximalen Befüllung bzw. einer maximal zulässigen Hublast (z.B. 3000 N) entspricht. Ist der Brätwagen nur halb befüllt, so wird dennoch diese Kraft bereitgestellt und der Antrieb läuft mit entsprechend hoher Leistung.

Bei den Nahrungsmittelmaschinen existiert aus Sicherheitsgründen die Forderung, die Abwärtsbewegung des Brätwagens ab der Horizontallage kontrolliert erfolgen zu lassen, um unter anderem zu verhindern, dass eine sich unter dem abwärts fahrenden Brätwagen befindende Person durch eine automatische und damit möglicherweise unbeaufsichtigte Abwärtsbewegung verletzt wird. Diese Sicherheitsforderung wird in der Praxis durch eine sogenannte "Totmannsteuerung" realisiert, bei welcher der Bediener beim Absenken des Brätwagens ab der Horizontallage ständig eine Taste betätigen muss, andernfalls wird die Abwärtsbewegung sofort gestoppt.

Die bekannte Hebeeinrichtung bringt jedoch wesentliche Nachteile mit sich. So muss der Bediener bei der Abwärtsbewegung ab der Waagerechten ständig eine Taste betätigen und kann somit nicht produktiv arbeiten. Außerdem muss der Bediener vor Einkippen des nächsten Brätwagens in den Vakuumfüller sicherstellen, dass der Trichter für die Aufnahme eines vollständig befüllten Brätwageninhalts ausreichend leer ist, damit kein Brät über den Trichterrand überläuft. Um dies sicherzustellen, wird in der Regel länger abgewartet als nötig. Dies alles führt in der Praxis zu unnötigen Wartezeiten und behindert den Arbeitsablauf.

Da zur Sicherstellung einer einwandfreien Funktion stets die Maximalkraft der Hebeeinrichtung (z.B. > 3000 N) wirkt, steigt die Verletzungsgefahr von Personen bzw. die Beschädigungsgefahr von Gegenständen, die sich im Bewegungsbereich der Hebeeinrichtung befinden, weil z.B. bei halb gefülltem Brätwagen die Kraftreserve (z.B. 1500 N) zu einer hohen Gefährdung führt.

Hiervon ausgehend liegt der vorliegenden Erfindung die Aufgabe zugrunde, eine Vorrichtung und ein Verfahren zum Beschicken von einer Lebensmittel verarbeitenden Maschine bereitzustellen, die sicher betrieben werden kann und die ermöglicht, die Neben- und Wartezeiten zu minimieren.

Erfindungsgemäß wird diese Aufgabe durch die Merkmale der Ansprüche 1 und 8 gelöst.

Gemäß der vorliegenden Erfindung umfasst die Vorrichtung eine Messeinrichtung zum Erfassen der Lebensmittelmenge im Behälter. Unter Lebensmittelmenge versteht man dabei entweder die Masse oder das Volumen des Lebensmittels oder einen entsprechenden Messwert. Somit kann die Lebensmittelmenge im Behälter automatisch ermittelt werden. Durch die Bestimmung der Lebensmittelmenge kann eine gezielte Prozessführung mit reduzierten Neben- und Wartezeiten realisiert werden. Der Beschickungsvorgang kann an die jeweilige Lebensmittelmenge angepasst werden. Insbesondere können die Geschwindigkeiten sowie die Antriebsleistung optimal eingestellt werden. Überlasten können sofort erkannt werden.

Insbesondere kann z.B. auch geprüft werden, ob und wann der Behälter nach dem Einkippen in die Maschine vollständig entleert ist oder ob sich noch Lebensmittelreste im Behälter befinden. Dies erfolgt durch Vergleichen des Messwertes mit dem bekannten Leergewicht. Diese Information kann entsprechend ausgewertet werden und es können noch weitere Maßnahmen eingeleitet werden. Außerdem kann durch die Bestimmung der Lebensmittelmenge auch festgestellt werden, ob beispielsweise in einem Fülltrichter schon ausreichend Platz ist, um die entsprechende Lebensmittelmenge aufzunehmen, um ein Überschwappen zu verhindern.

Die Vorrichtung umfasst eine Steuereinrichtung, die derart ausgelegt ist, dass die Leistung des Antriebs der Hebeeinrichtung in Abhängigkeit der erfassten Lebensmittelmenge eingestellt wird, wobei mit steigender Masse des Lebensmittels im Behälter die Leistung des Antriebs steigt.

Die Steuereinrichtung erzeugt also ein Steuersignal für den Antrieb, das abhängig ist von dem Messwert bzw. einem von der Messeinrichtung erzeugten Signal. Das bedeutet, dass vorteilhafterweise keine sicherheitskritischen Hubkraftreserven vorgesehen sind, so dass, wenn in der Praxis z. B. ein halb voller Behälter angehoben wird, auch nur die halbe Kraft für ein entsprechendes Lebensmittel bereitgestellt werden muss. Da der Antrieb bei kleinerer Lebensmittelmenge nur mit einer entsprechend geringeren Leistung läuft, können auch erheblich Energiekosten gespart werden. Auch die Gefährdung für eine sich im Arbeitsbereich der Hebeeinrichtung befindende Person, ebenso wie die Beschädigungsgefahr von Gegenständen durch Kollision mit der Hebeeinrichtung sinkt.

Zum Erfassen der Lebensmittelmenge ermittelt die Messeinrichtung beispielsweise die Masse des Lebensmittels. Dazu kann z.B. eine Waage (Gewichtssensor) in dem Behälter oder aber außerhalb des Behälters z.B. im Bereich einer Behälteraufnahme vorgesehen sein. Insbesondere kann auch die Hublast bestimmt werden, da das Leergewicht des Behälters sowie z.B. das Gewicht der Armhebeeinrichtung konstant sind. Die Hublastermittlung kann ganz vorteilhaft in der Hebeeinrichtung, insbesondere im Antriebsbereich der Hebeeinrichtung integriert sein und beispielsweise über einen Drucksensor in einem Hydrauliksystem oder aber über eine Strommesseinrichtung für den elektrischen Antrieb der Hebeeinrichtung realisiert sein. Dazu ist vorteilhafterweise eine hydraulische Hebeeinrichtung vorgesehen mit einer Hydraulikpumpe mit elektrischem Antrieb, deren Leistung in Abhängigkeit der Lebensmittelmenge verstellbar ist, und insbesondere die Geschwindigkeit der Hebeeinrichtung über eine Drosseleinrichtung einstellbar ist. Die Messeinrichtung kann auch einen Positionssensor für den Behälter umfassen.

In vorteilhafter Weise weist die Vorrichtung eine Einrichtung zur Kollisionserkennung auf, die eine Messwertänderung der Messeinrichtung oder eine Abweichung von einem Sollwert erfasst und in Abhängigkeit der Messwertänderung bzw. Abweichung bestimmt, ob eine Kollision stattgefunden hat, und insbesondere die Hebeeinrichtung stoppt und/oder um eine bestimmte Strecke zurückfährt, wenn eine Kollision stattgefunden hat. Die Messeinrichtung ist dabei vorzugsweise derart ausgebildet und angeordnet, so dass durch eine Kollision erzeugte Kräfte erfasst werden können. Eine Kollision beim Herabfahren des Behälters würde also zu einer Reduzierung des erfassten Messwerts für den Leerbehälter führen. Eine entsprechende Messwertänderung wird ausgewertet und wenn beispielsweise ermittelt wird, dass die Messwertänderung beim Auf- oder Abbewegen der Hebeeinrichtung größer als ein vorbestimmter Wert ist, wird dies als Kollision ausgewertet und es kann entsprechend reagiert werden. Durch diese Einrichtung zur Kollisionserkennung ist es möglich, dass die Hebeeinrichtung eigenständig abwärts fahren kann und zwar ohne Totmannsteuerung. Da beim Herabfahren des Behälters nur noch das Leergewicht herabgefahren wird, wird auch die Leistung des Antriebs im Vergleich zum gefüllten Behälter reduziert und es wird nur noch eine zum Senken des leeren Behälters erforderliche Kraft bereitgestellt was zu einer erhöhten Sicherheit beiträgt. Dadurch, dass keine Totmannsteuerung mehr notwendig ist, können Neben- und Wartezeiten wesentlich minimiert werden.

Es ist ganz besonders vorteilhaft, wenn auch im Aufnahmebereich der Lebensmittel verarbeitenden Maschine, insbesondere in einem Fülltrichter, mindestens ein Füllstandsensor vorgesehen ist. Über den Füllstandsensor kann der Lebensmittelinhalt im Fülltrichter bzw. Aufnahmebereich ermittelt werden. Da das Gesamtvolumen des Aufnahmebereichs bzw. des Trichters bekannt ist und in der Steuerung hinterlegt ist, kann mit den Parametern" aktueller Füllstand im Aufnahmebereich", "Gesamtvolumen des Aufnahmebereichs " sowie" Lebensmittelmenge im Behälter" automatisch der ideale Zeitpunkt ermittelt werden, wann die Vorrichtung den Behälterinhalt in den Aufnahmebereich einfüllen darf. Da auch die erforderliche Dauer zum Hochfahren des Behälters bekannt ist, kann die Bewegung entsprechend frühzeitig beginnen. Dadurch können unnötige Wartezeiten eliminiert werden. Außerdem befindet sich der schwere befüllte Behälter nicht unnötig lange in der angehobenen Position, womit das Gefährdungspotential am Arbeitsplatz weiter reduziert wird. Entweder kann der Zeitpunkt, z.B. wann der Zustand erreicht ist, dass der Inhalt des Brätwagens in den Fülltrichter passt, von der Maschine optisch, akustisch und/oder auf andere Weise angezeigt werden oder die Steuerung der Maschine leitet automatisch den Beschickungsvorgang und somit den Start der Hubbewegung und oder Start der Entleerung ein. Der Behälter kann also aufgrund der ermittelten Werte vorausschauend hochgefahren werden und dann, sobald der Füllstand im Aufnahmebereich bzw. Trichter es zulässt, kann der Inhalt des Behälters eingefüllt werden. Alternativ kann der optimale Zeitpunkt zum Starten der Hubbewegung ermittelt werden.

Durch die Erfindung ist es auch möglich, dass die Steuereinrichtung derart ausgelegt ist, dass die Geschwindigkeit der Hebeeinrichtung veränderbar ist und insbesondere bestimmte Geschwindigkeitsprofile einstellbar sind. Der Behälter kann beispielsweise mit einer sich ändernden Geschwindigkeit angehoben und gesenkt werden. Da jedes Produkt unterschiedliche Eigenschaften aufweist (festes oder auch sehr flüssiges Brät), kann so beispielsweise der für jedes Produkt optimale Einkippvorgang in einem entsprechenden Speicher abgelegt werden. Es kann z.B. das Anheben des Brätwagens langsam erfolgen (Sanftanlauf), um ein Überströmen beispielsweise von dünnflüssigen Massen aus dem Brätwagen zu verhindern. Danach kann der Brätwagen beschleunigt werden bis zu einer Maximalgeschwindigkeit und kurz vor dem Einkippen kann die Verzögerung beispielsweise ebenfalls wieder behutsam eingeleitet werden. So wird möglich, den Beschickungsvorgang zeitlich zu optimieren, ohne dass dabei die Masse aus dem Brätwagen daneben schwappt. Folglich kann der Behälter z.B. bei dünnflüssigen Produkten auch komplett befüllt werden. Die Abwärtsbewegung kann nach dem Entleeren des Behälters manuell oder automatisch mit bzw. ohne Totmannsteuerung eingeleitet werden.

Die Zeitdauer für das Hochfahren der Hebeeinrichtung in eine Entleerposition kann gespeichert sein. Der Zeitpunkt zu dem der Behälter entleert werden kann, kann vorausschauend in Abhängigkeit des im Fülltrichter gemessenen Füllstands bestimmt werden. Der Zeitpunkt des Beginns der Hubbewegung des Behälters kann dann von der Steuereinrichtung derart bestimmt werden, dass der Behälter zum frühestmöglichen Zeitpunkt entleert werden kann, und insbesondere der Beginn der Hubbewegung zeitlich vorausschauend so von der Steuerung eingeleitet wird, dass wenn der Behälter in seiner Entleerposition ist, auch sofort entleert werden kann.

Alternativ kann der Behälter hochgefahren werden und der Einkippvorgang zu einem definierten Ereignis bzw. Zeitpunkt eingeleitet werden, z. B. wenn der Brätwageninhalt in den Fülltrichter passt.

Insbesondere kann nach dem Entleeren durch die Messeinrichtung bestimmt werden ob der Behälter vollständig entleert ist. Dazu kann z.B. nach dem Entleeren des Behälters das Behältergewicht bestimmt und mit dem bekannten Leergewicht verglichen werden, wobei, wenn bestimmt wird, dass der Behälter noch nicht ganz leer ist, also z.B. das Behältergewicht noch um einen bestimmten Betrag größer ist als das Leergewicht, entweder der Einkippvorgang der Hebeeinrichtung zeitlich verlängert wird und/oder ein neuer Einkippvorgang eingeleitet wird und/oder z. B. eine Rüttelbewegung durch mehrfaches Fahren des Behälters gegen einen Endanschlag erfolgt.

Die vorliegende Erfindung wird nachfolgend unter Bezugnahme der vorliegenden Figuren näher erläutert.
- Fig. 1: zeigt eine Vorrichtung gemäß der vorliegenden Erfindung mit abgesenkter Armhebeeinrichtung.
- Fig. 2: zeigt die in Fig. 1 gezeigte Vorrichtung mit halb angehobener Armhebeeinrichtung.
- Fig. 3: zeigt die in Fig. 1 und 2 gezeigte Vorrichtung mit einer Armhebeeinrichtung in Entleerposition.
- Fig. 4: zeigt schematisch eine Vorrichtung gemäß der vorliegenden Erfindung mit einer hydraulischen Hebeeinrichtung.
- Fig. 5: zeigt einen Graphen, in dem die Antriebsleistung in Abhängigkeit der Masse dargestellt ist.
- Fig. 6: zeigt einen Graphen, in dem der Messwert der Messeinrichtung in Abhängigkeit der Zeit dargestellt ist.
- Fig. 7: zeigt schematisch die Messeinrichtung, die Steuerung und den Antrieb der Hebeeinrichtung gemäß der vorliegenden Erfindung.

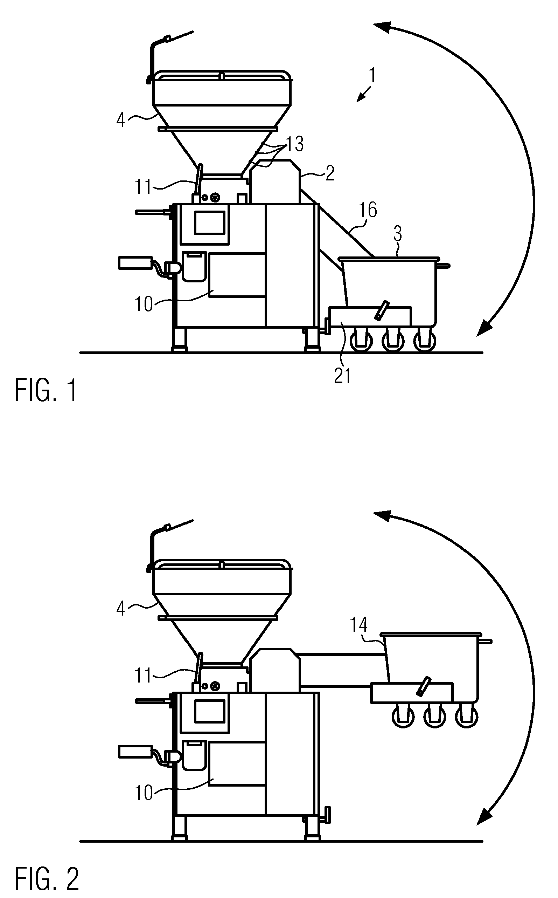

Fig. 1 bis 3 sowie Fig. 4 zeigen ein bevorzugtes Ausführungsbeispiel zum Beschicken von einer Lebensmittel verarbeitenden Maschine mit einer Armhebeeinrichtung. Genauso geeignet ist jedoch auch eine Masthebeeinrichtung. Bei diesem Ausführungsbeispiel ist die Hebeeinrichtung 2 mit der Maschine 11, hier einer Füllmaschine, verbunden. Die Vorrichtung könnte jedoch auch als eigenständige Einheit ausgeführt werden. Genauso geeignet ist die Vorrichtung auch zum Beschicken eines Kutters.

Die Vorrichtung weist einen Behälter 3 zur Aufnahme von Lebensmitteln, z.B. Wurstbrät, auf. Der Behälter hat beispielsweise ein Füllvolumen in einem Bereich von 100 bis 1000 Liter. Hier ist der Behälter 3 als mit Rollen 5 versehener fahrbarer Wagen ausgebildet. Der Behälter 3 wird in einer nicht speziell dargestellten Aufnahmeeinheit 21 der Hebeeinrichtung 2 derart befestigt, dass er sicher gegen Herausfallen verriegelt ist. Dies kann erfolgen, indem der Behälter beispielsweise in einen nicht näher dargestellten Aufnahmekorb einrastet. Es kann ein Sensor vorgesehen sein, der erkennt, ob der Behälter 3 in der Aufnahme angeordnet und verriegelt ist. Ein weiterer Betrieb der Hebeeinrichtung 2 kann nur dann erfolgen, wenn der Brätwagen sicher verriegelt ist.

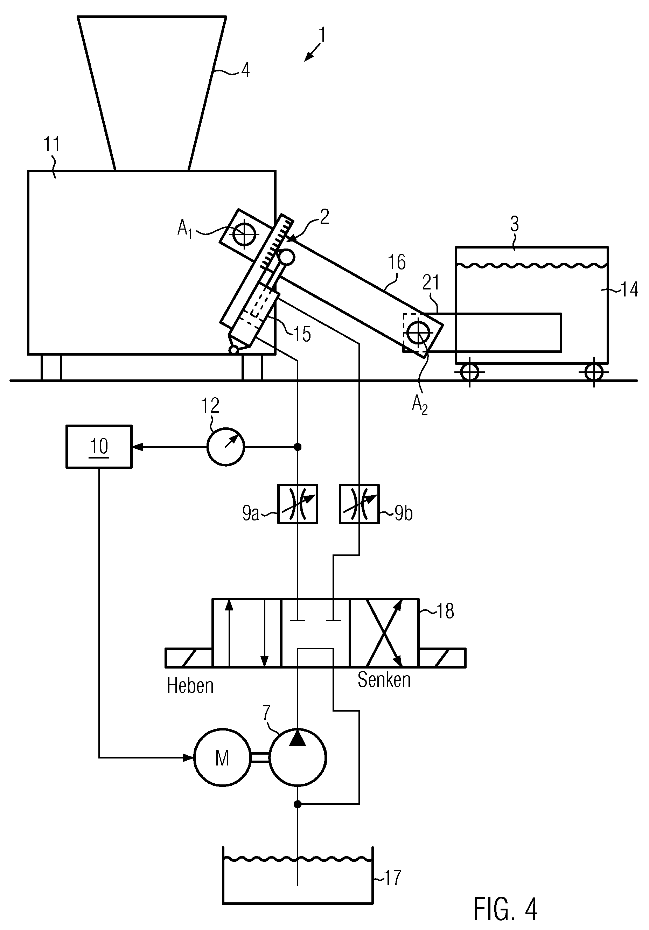

Wie insbesondere aus Fig. 4 hervorgeht, ist der Behälter 3 an einem Arm 16 angeordnet. Zum Entleeren ist der Behälter 3 dabei beispielsweise um die Achse A2 relativ zum Arm 16 über einen nicht näher erläuterten Schwenkmechanismus schwenkbar. Der Arm 16 wiederum ist um die Achse A1 zum Ausüben einer Hebe- und Senkbewegung schwenkbar angeordnet. Im Betrieb der Vorrichtung kann eine Hebe- und Schwenkbewegung auch überlagert werden.

Die Vorrichtung weist weiter einen Antrieb 7 auf. In diesem Ausführungsbeispiel ist die Hebeeinrichtung 2 als hydraulische Hebeeinrichtung ausgebildet und umfasst einen Hydraulikzylinder 15, durch dessen Bewegung über einen entsprechenden Mechanismus der Arm 16 heb- und senkbar ist. In bekannter Weise umfasst die hydraulische Hebeeinrichtung eine Hydraulikpumpe 7 mit einem elektrischen Antrieb, hier Antriebsmotor M, ein Hydraulikventil 18 zum Steuern der Auf- und Abbewegung sowie einen Behälter 17 für die Hydraulikflüssigkeit, hier einen Ölbehälter. Im Hydrauliksystem ist ein Drucksensor 12 vorgesehen, dessen Funktion nachfolgend noch näher erläutert wird und der beispielsweise seine Messwerte an eine Steuerung 10 weiterleitet. Auch der Antrieb für die Hebeeinrichtung 2, hier der Motor für die Hydraulikpumpe 7, ist mit der Steuereinrichtung 10 verbunden derart, dass die Leistung des Motors in Abhängigkeit des Behälterinhalts eingestellt wird.

Die Maschine zum Verarbeiten der Lebensmittel, hier die Füllmaschine 11, weist einen Aufnahmebereich für das Lebensmittel, hier den Fülltrichter 4 auf. Das Lebensmittel wird in den Fülltrichter 4 eingekippt und weiter verarbeitet.

Gemäß der vorliegenden Erfindung weist die Vorrichtung eine Messeinrichtung zum Erfassen der Lebensmittelmenge im Behälter 3 auf.

Die Lebensmittelmenge kann auf unterschiedliche Art und Weise erfasst werden.

Eine bevorzugte Möglichkeit liegt darin, dass im Antriebsbereich der Hebeeinrichtung 2 mindestens ein Sensor 12 integriert ist, über den ein der Hublast entsprechender Wert ermittelbar ist. Da das Leergewicht konstant ist, hängt die tatsächliche Hublast vom Behälterinhalt ab.

Eine Möglichkeit besteht darin, einen Drucksensor 12 vorzusehen, der den Druck im Hydrauliksystem misst. Alternativ oder zusätzlich kann auch eine Strommessung des elektrischen Antriebs, hier des Motors der Hydraulikpumpe 7, gemessen werden. Die Messung des Stroms eignet sich auch für eine elektrische Hebeeinrichtung.

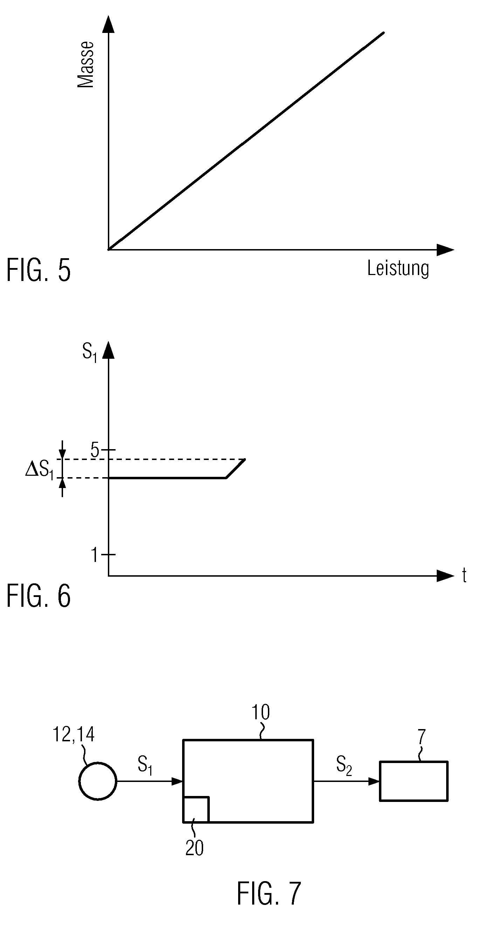

Die Messung kann dann beispielsweise so erfolgen, dass der Behälter 3 in der Hebeeinrichtung 2 befestigt und verriegelt wird und anschließend die Leistung des Motors so lange erhöht wird, bis über einen nicht dargestellten Bewegungssensor ein Anheben detektiert wird. Dann ist die Hubkraft im Wesentlichen gleich der Hublast und es kann ein entsprechender Messwert S1 über den Drucksensor 12 oder eine entsprechende Stromstärke im Motor M ermittelt werden, die einer bestimmten Hublast bzw. einer bestimmten Lebensmittelmenge im Behälter 3 entsprechen. Ein entsprechendes Signal S1 wird an die Steuerung 10 geleitet, wie insbesondere aus Fig. 7 hervorgeht.

Über den Drucksensor 12 und die Strommesseinrichtung im Antriebsbereich der Hebeeinrichtung 2 kann der Behälterinhalt auch noch wie folgt ermittelt werden. Die Leistung des Antriebs wird bei vorgegebener Drosselventilstellung langsam erhöht. Dadurch steigt der Druck im Hydrauliksystem. Der Druck wird über den Sensor 12 gemessen. Entspricht die vom Hydraulikantrieb erzeugte Kraft der Hublast, kann sich der Hydraulikzylinder bewegen und der Druck bleibt konstant und entspricht der Masse im Behälter 3. Der Messwert kann an die Steuerung 10 geleitet werden. Die Messung kann dann kontinuierlich fortgesetzt werden.

Es ist aber auch möglich, den Behälterwageninhalt bzw. die Hublast nicht wie zuvor beschrieben, dynamisch zu ermitteln, sondern statisch. Dazu wird der Behälter um eine Höhe h angehoben und dann, beispielsweise über den Drucksensor oder die Strommesseinrichtung, die Hublast bestimmt. Dies erfolgt z.B. so:
Die Leistung des Motors M wird langsam mit einer vorbestimmten Änderungsrate erhöht. Der Behälter 3 wird bis zu einer vorbestimmten Höhe, z.B. 2 bis 5 cm (ausgehend von der untersten Position des Behälters 3) angehoben. Das Erreichen der Höhe h kann z.B. über einen nicht dargestellten Positionssensor erfasst werden. Dann wird ein entsprechender Messwert S1 beispielsweise über den Drucksensor 12 erfasst. Der Messwert S1 ist proportional zu der Hublast bzw. zu dem Behälterinhalt und kann von einer Steuerung 10 ausgewertet werden, um die Leistung der Hebeeinrichtung entsprechend einzustellen.

Zur statischen Messung wäre es auch möglich, z.B., wie zuvor beschrieben, die Leistung des Motors M langsam mit einer vorbestimmten Änderungsrate zu erhöhen und nach einer vorbestimmten Zeit t die Höhe, die der Behälter 3 erreicht hat, zu messen. Die nach der vorbestimmten Zeit t erreichte Höhe ist dann proportional zur Hublast oder aber zu dem Behälterinhalt.

Entsprechend der ermittelten Messwerte kann dann in der Steuerung auch hier eine entsprechende Masse, durch vorab eingespeicherte (experimentell ermittelte oder berechnete) Vergleichswerte, ermittelt werden und über die Dichte des Behälterinhalts auch bei Bedarf das Volumen ermittelt werden.

Die Lebensmittelmenge kann jedoch auch über mindestens einen Füllstandssensor 14 im Behälter 3 realisiert werden. Ein entsprechender Wert kann dann ebenfalls an die Steuerung 10 weitergeleitet werden.

Es ist auch möglich, dass beispielsweise ein Gewichtssensor, beispielsweise eine Waage, im Behälter 3 oder der Behälteraufnahme 21 angeordnet ist. Auch hier kann ein entsprechender Messwert an die Steuerung 10 weitergegeben werden.

Die Steuerung 10 erfasst also, wie aus Fig. 7 hervorgeht das Signal S1 einer Messeinrichtung, wobei das Signal S1 abhängt von der Füllmenge im Behälter 3. Die Steuereinheit 10 sendet ein Steuersignal S2 an den Antrieb 7 der Hebeeinrichtung 2, wobei das Signal S2 abhängig ist von dem Signal S1. Das bedeutet, dass die Leistung des Antriebs 7 in Abhängigkeit der erfassten Lebensmittelmenge gesteuert wird. Wie insbesondere aus Fig. 5 hervorgeht, nimmt mit steigender Masse m des Lebensmittels im Behälter 3 die Leistung des Antriebs 7 zu.

Dabei ist die Leistung des Antriebs so ausgelegt, dass eine Hubkraft bereitgestellt wird, die nur geringfügig höher (z.B. 20 - 100 N) ist als die Hublast, so dass ein zuverlässiges Heben und Senken des Behälters 3 möglich ist.

Das bedeutet, dass die Antriebsleistung der Hebeeinrichtung 2 automatisch an die jeweilige Hublast angepasst werden kann, so dass die Hebeeinrichtung, anders als im Stand der Technik, nicht immer mit voller Leistung laufen muss. Daraus ergibt sich der Vorteil, dass keine sicherheitskritische Hubkraftreserve installiert werden muss. Das heißt, in der Praxis wird für einen halbvollen Behälter auch nur die halbe Kraft bereitgestellt. Dadurch sinkt die Gefährdung für Personen, die sich im Arbeitsbereich der Hebeeinrichtung 2 befinden.

Während bei Masthebeeinrichtungen die Hublast im Wesentlichen konstant ist, ändert sich bei der Armhebeeinrichtung aufgrund der Armhebelwirkung die aufzubringende Hubkraft. Ausgehend von dem z.B. statisch ermittelten Messwert S1 kann dann z.B. die Hubkraft entsprechend einem vorbestimmten Profil oder vorzugsweise über eine ständige Messung des hydraulischen Drucks und der Geschwindigkeit an die jeweilige Position des Behälters 3 bzw. des Arms 6 angepasst werden. Das heißt, dass sich die Leistung bzw. die Hubkraft während des Anhebens ändert. In Abhängigkeit der Lebensmittelmenge in dem Behälter wird dann das Leistungsprofil angepasst. Es ist aber auch möglich bei der Armhebeeinrichtung beim Heben eine konstante Leistung einzustellen, die etwas größer (20 - 100 N) als die maximal erforderliche Hublast ist.

Vorteilhafterweise umfasst die Vorrichtung eine Einrichtung zur Kollisionserkennung, die vorteilhafterweise in die Steuereinrichtung 10 integriert ist. Die Einrichtung zur Kollisionserkennung erfasst beim Auf- und Abfahren der Hebeeinrichtung kontinuierlich die Messwerte S1 zum Erfassen der Lebensmittelmenge bzw. hier der Masse bzw. der Hublast. Vorteilhafterweise erfolgt dabei eine dynamische Messung der Hublast während des Bewegungsvorgangs der Hebeeinrichtung. Diese dynamische Messung erfolgt beispielsweise durch Messen des Drucks über den Sensor 12 oder über eine Messeinrichtung die außerhalb des Behälters angeordnet ist derart, dass eine Kraft, die auf den Behälter wirkt, erfasst werden kann. Eine Messung während des Hebens und Senkens kann also z.B. auch über einen Gewichtssensor in der Aufnahmeeinrichtung 21 oder durch Überwachung des Stromverlaufs bei elektrischen Antrieben erfolgen.

Stößt nun beispielsweise beim Senken der Hebeeinrichtung 2 der Behälter 3 gegen eine Person oder einen Gegenstand, so wirkt eine der Hublast entgegengesetzte Kraft nach oben, so dass sich der Messwert S1 für den Leerbehälter ändert. Wie insbesondere aus Fig. 6 hervorgeht, wird eine entsprechende Änderung ΔS1 durch die Kollisionseinrichtung 20 erfasst. Dazu kann, nur als Beispiel, ein Komparator vorgesehen sein, der einen Messwertvergleich nachfolgender Messwerte durchführt. Übersteigt die Messwertschwankung ΔS1 oder die Steigung der Messwertkurve einen vorbestimmten Wert, so bestimmt die Einrichtung zur Kollisionserkennung, dass eine Kollision stattgefunden hat. Über die Steuereinrichtung 10 kann dann die Hebeeinrichtung 2 sofort abgeschaltet und/oder zurückgefahren werden und gegebenenfalls ein entsprechendes Warnsignal ausgeben. Die Kollisionserkennungseinrichtung 20 ermittelt die Kollision bei der Aufwärts- und Abwärtsbewegung, nicht jedoch beim Entleeren des Behälters 3, da es hier durch das Entleeren zu Schwankungen ΔS1 kommt.

Wird beispielsweise keine dynamische Messwerterfassung vorgenommen sondern die Leistung der Hebeeinrichtung oder das Leistungsprofil entsprechend einer statischen Messung bestimmt, so kann dann gleichzeitig, wie zuvor beschrieben, ein Messwert S durch den Drucksensor 12 oder durch Erfassen einer entsprechenden Stromstärke im Motor M gemessen werden. Dieser Messwert muss dann einem bestimmten Sollwert (entsprechend der konstanten Leistung oder dem vorbestimmten Leistungsprofil) entsprechen. Kommt es, wie auch zuvor beschrieben, zu einer Abweichung ΔS1 des Messwerts von dem vorbestimmten Sollwert, so wird bestimmt, dass eine Kollision stattgefunden hat.

Dadurch, dass die Antriebsleistung der Hebeeinrichtung 2 abhängt von dem Lebensmittelinhalt im Behälter 3, d.h. dass im Vergleich zum Stand der Technik eine reduzierte Kraft bereitgestellt wird und dadurch, dass Kollisionen rechtzeitig erkannt werden können, ist keine Totmannsteuerung mehr notwendig und ein automatischer Ablauf wird möglich. Somit können wirkungsvoll Neben- und Wartezeiten minimiert werden.

Es ist besonders vorteilhaft, wenn auch im Aufnahmebereich, d.h. im Trichter 4, mindestens ein Füllstandsensor vorgesehen ist. Über diesen Füllstandsensor kann der aktuelle Füllstand im Trichter festgestellt werden. Vorteilhafterweise ist in dem Aufnahmebereich 4 bzw. in dem Fülltrichter mindestens ein Füllstandsensor 13 vorgesehen, um den Füllstand des Lebensmittels im Trichter zu ermitteln. Das Gesamtvolumen des Aufnahmebereichs bzw. Trichters 4 ist bekannt und in der Steuerung hinterlegt. Somit kann bestimmt werden, ob noch ausreichend Platz für das Füllgut aus Behälter 3 in dem Aufnahmebereich 4 ist. Mit den Parametern "aktueller Füllstand im Aufnahmebereich 4", "Gesamtvolumen des Aufnahmebereichs 4", sowie "Lebensmittelmenge im Behälter 3", insbesondere dem entsprechenden Volumen, kann dann automatisch der ideale Zeitpunkt ermittelt werden, um den Behälter 3 zu entleeren, bzw. die Hubbewegung der Hebeeinrichtung einzuleiten. Das Volumen des Lebensmittels im Behälter 3 kann entweder durch einen Füllstandsensor ermittelt werden oder aber über die durch die Messeinrichtung ermittelte Masse und die entsprechende Dichte durch die Steuerung berechnet werden.
- Die Dichte kann man erhalten aus einem in der Maschinensteuerung im Programmspeicher hinterlegten Wert oder aus den Messwerten der aktuellen Produktion. So kann beispielsweise mit dem Förderwerk der Maschine der aktuelle, der gesamte, oder in einem bestimmten Zeitintervall verarbeitet Massedurchsatz (z.B. in Liter) erfasst werden. Zusätzlich wird der Füllstand im Trichter mittels Füllstandsensor ermittelt. Ebenso ist das Gesamtgewicht des in den Fülltrichter eingefüllten Produkts bekannt.
- Die Dichte kann ebenfalls extern gemessen und in die Steuerung eingegeben werden, oder
- die Dichte kann gemessen werden und automatisch zur Steuerung übertragen werden, z.B. mittels eines am Behälter angebrachten RFID-Tags.
- Über Volumen und Masse des Inhalts im Brätwagen kann ebenfalls die Dichte bestimmt werden. Dazu ist ein zusätzlicher Füllstandssensor 14 vorteilhaft. Eine Bestimmung der Dichte ist auch mittels Inline-Messung des Luftgehalts im Brät, wie beispielsweise in der EP 1040758 beschrieben, möglich.

Dadurch, dass der ideale Zeitpunkt ermittelt werden kann, wann die Hebeeinrichtung den Brätwagen in den Trichter einfüllen kann, können unnötige Wartezeiten eliminiert werden. Entweder kann der Zeitpunkt, z.B. wann der Zustand erreicht ist, dass der Inhalt des Brätwagens in den Fülltrichter passt, von der Maschine optisch, akustisch und/oder auf andere Art und Weise angezeigt werden oder die Steuerung der Maschine leitet automatisch den Beschickungsvorgang und somit den Start der Hebeeinrichtung ein.

Der Behälter kann somit auch vorausschauend hochgefahren werden und sobald der Füllstand dies zulässt, kann dann der Inhalt in den Fülltrichter eingefüllt werden. Alternativ kann auch der optimale Zeitpunkt zum Starten der Hebeeinrichtung ermittelt werden.

Es ist auch möglich, dass in der Steuerung veränderliche Hub- und/oder Absenkgeschwindigkeiten abgelegt sind, so dass Neben- und Wartezeiten weiter reduziert werden können. Die Hebeeinrichtung kann teil- bzw. vollautomatisiert ausgeführt werden mit veränderbaren Geschwindigkeiten. So können mit dem Behälter bestimmte Bewegungs- bzw. Geschwindigkeitsprofile abgefahren werden. Diese Profile können beispielsweise in der Steuerung (z.B. in der in der Maschine integrierten Hauptsteuerung oder in einer externen Steuerungseinheit) hinterlegt sein. Die Geschwindigkeit wird durch Einstellen des Drosselventils 9a und/oder des Drosselventils 9b und/oder durch die Motordrehzahl gesteuert. Da jedes Produkt unterschiedliche Eigenschaften aufweist (festes oder auch sehr flüssiges Brät), kann so beispielsweise der für jedes Produkt optimale Einkippvorgang, z.B. in einem Produktdatenspeicher, abgelegt werden.

Es kann z.B. das Anheben des Brätwagens langsam erfolgen (Sanftanlauf), um ein Überströmen beispielsweise von dünnflüssigen Massen aus dem Brätwagen zu verhindern. Danach kann der Brätwagen beschleunigt werden bis zu einer Maximalgeschwindigkeit und kurz vor dem Einkippen kann die Verzögerung beispielsweise ebenfalls wieder behutsam eingeleitet werden. So wird ermöglicht, den Beschickungsvorgang zeitlich zu optimieren, ohne dass dabei die Masse aus dem Brätwagen daneben schwappt. Folglich kann der Brätwagen z.B. bei dünnflüssigen Produkten, komplett gefüllt werden.

Zusätzlich kann durch die Ermittlung der Lebensmittelmenge sowohl vor als auch nach dem Einkippen in den Aufnahmebereich 4 die dem jeweiligen Vakuumfüller bereitgestellte Gesamtmenge ermittelt werden. So kann z.B. die gesamte Tagesproduktion auf der entsprechenden Vakuumfüllmaschine oder auch die Gesamtcharge einer Wurstsorte ermittelt werden. Alternativ bzw. zusätzlich kann durch Auswerten folgender Parameter:
- aktuelle Füllerleistung (Liter/min),
- aktueller Füllstand im Aufnahmebereich 4,
- aktueller Behälterinhalt (beispielsweise über einen Zentralrechner im Meisterbüro) auch die Bereitstellung von Lebensmitteln, insbesondere Brät, gesteuert werden. So können beispielsweise folgende Meldungen ausgegeben werden:
   Liniel : noch 14 Minuten bis Produktionsstopp infolge Brätmangel,
   Linie 2: noch 4 Minuten bis Produktionsstopp infolge von Brätmangel etc.

Nachfolgend wird ein Verfahren gemäß der vorliegenden Erfindung unter Bezugnahme der Fig. 1 bis 4 im Zusammenhang mit einer Füllmaschine näher erläutert. Das Verfahren ist jedoch ebenso mit einer anderen Lebensmittel verarbeitenden Maschine möglich.

Der Bediener oder eine andere Person bringt einen befüllten Behälter 3, insbesondere Brätwagen, zur Vakuumfüllmaschine 11 und rastet diesen sicher im Aufnahmekorb 21 der Hebeeinrichtung 2 ein. Vorteilhafterweise erkennt ein Sensor, ob sich ein Wagen in der Aufnahme befindet und ob dieser verriegelt ist (siehe Fig. 1).

Wenn dem so ist, wird über eine Messeinrichtung 12 die Lebensmittelmenge im Behälter bzw. ein entsprechender Wert über eine Messeinrichtung 12 erfasst und ein entsprechendes Signal S1 an die Steuereinrichtung 10 geleitet. Eine Überlast kann rechtzeitig erkannt werden, z.B. infolge eines unzulässig beladenen Brätwagens. In Abhängigkeit des Signals S1 erzeugt die Steuereinrichtung 10 ein Steuersignal S2, das den Antrieb der Hebeeinrichtung 2 ansteuert um den Behälter anzuheben (siehe Fig. 2). Über einen Füllstandsensor 13 wird der Inhalt des Fülltrichters 4 ermittelt. Wie zuvor beschrieben, wird über die Messeinrichtung 12,14 zum Erfassen der Lebensmittelmenge das Volumen des Lebensmittels im Behälter 3 bestimmt oder berechnet. Die Steuerung ermittelt dann automatisch den idealen Zeitpunkt, wann die Hebeeinrichtung 2 den Brätwageninhalt in den Trichter 4 einfüllen darf. Dadurch können unnötige Wartezeiten eliminiert werden. Der Zeitpunkt, wann z.B. der Zustand erreicht ist, dass der Inhalt des Brätwagens in den Fülltrichter passt, kann von der Maschine optisch, akustisch und/oder auf andere Art und Weise angezeigt werden. Bei einer automatischen Steuerung der Maschine leitet die Steuerung automatisch den Beschickungsvorgang und somit den Start der Hebeeinrichtung ein und kippt automatisch zum richtigen Zeitpunkt den Behälterinhalt 3 in den Trichter 4.

Die Geschwindigkeit, mit der die Hebeeinrichtung bewegt wird, kann über die Drosselventile 9a und/oder 9b eingestellt werden. Es können auch bestimmte Geschwindigkeitsprofile, die in einem Speicher der Steuerung abgelegt sind, gewählt werden. Eine Einrichtung zur Kollisionserkennung erfasst kontinuierlich während der Aufwärts- und Abwärtsbewegung Messwerte S1 der Messeinrichtung, insbesondere der Sensoren im Antriebsbereich der Hebeeinrichtung oder aber einen Gewichtssensor, z.B. im Bereich der Aufnahme 21. Bei Kollision während der Abwärtsbewegung des Behälters 3 kommt es zu einer Messwertänderung, da eine der Gewichtskraft entgegenwirkende Kraft auftritt. Insbesondere ändert sich z.B. der im Hydrauliksystem mit dem Sensor 12 gemessene Druck. Auch ein Gewichtssensor würde einen veränderten Messwert anzeigen. Überschreitet die Messwertänderung einen vorbestimmten Betrag, stoppt die Maschine automatisch oder fährt die Hebeeinrichtung zurück. Kommt es beim Aufwärtsbewegen zu einer Kollision, so gibt es ebenfalls eine entsprechende Messwertänderung, da zusätzlich zur Hublast eine weitere Kraft nach unten wirkt, so dass ebenso eine Kollision aufgrund einer entsprechenden Messwertänderung detektiert wird. Auch hier wird beispielsweise die Hebeeinrichtung 2 gestoppt. Tritt also ein entsprechender unerwarteter Lastzustand auf, so kann die Hebeeinrichtung 2 auch derart ausgeführt sein, dass die Bewegung des Behälters 3 dennoch weiter ausgeführt werden kann, jedoch nur mittels Totmannsteuerung.

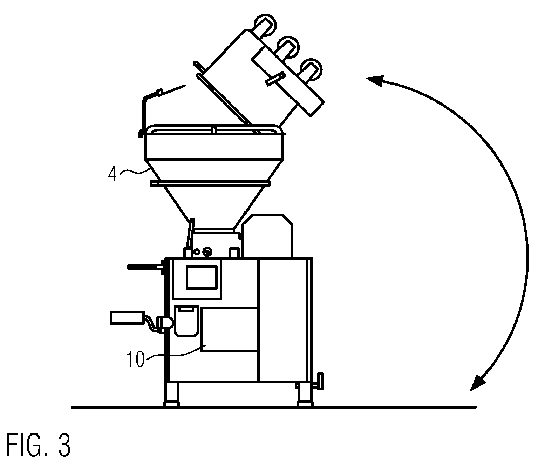

Nach dem Entleeren des Behälters in den Trichter 4 (Fig. 3) kann geprüft werden, ob der Behälter vollständig entleert ist oder ob sich nach dem Einkippen des Behälters in den Fülltrichter noch Reste im Behälter befinden, indem das nach dem Einkippen ermittelte Behältergewicht mit dem bekannten Leergewicht, das in dem Speicher der Steuerung 10 abgelegt ist, verglichen wird. Dies kann z.B., wie zuvor beschrieben, durch einen Gewichtssensor erfolgen oder alternativ einfach durch Bestimmen einer Messwertänderung ΔS1 des Drucksensors 12. Diese Information kann entsprechend ausgewertet werden und es können weitere Maßnahmen eingeleitet werden. So kann der Einkippvorgang der Hebeeinrichtung zeitlich verlängert werden, oder es wird erneut eingekippt oder es kann z.B. auch mehrmals gegen einen Endanschlag gefahren werden (Rüttelbewegung).

Nach der vollständigen Entleerung wird der Behälter über die Hebeeinrichtung abgesenkt, entriegelt und aus der Vorrichtung entnommen. Danach kann der nächste Behälter 3 in die Vorrichtung eingesetzt werden.

Das erfindungsgemäße Verfahren ermöglicht, dass der Maschinenbediener ohne Produktionsunterbrechung produzieren kann, da er durch den automatisierten oder teilautomatisierten Arbeitsablauf entlastet wird. Zur weiteren Automatisierung kann der Brätwagen nach dem Absenken z.B. auch automatisch entriegelt werden. Bei der statischen Messung wird zur Kollisionsüberwachung zusätzlich über eine Messeinrichtung, beispielsweise kontinuierlich über den Drucksensor 12, der Druck gemessen und z.B. mit einem Drucksollwert, der der Lebensmittelmengen-abhängigen Leistung entspricht, verglichen oder es wird auch hier eine entsprechende Messwertänderung erfasst, um beispielsweise eine Kollision zu erfassen oder um zu bestimmen, wann der Behälter vollständig entleert ist.

## Patentansprüche

1. Vorrichtung zum Beschicken von einer Lebensmittel verarbeitenden Maschine (11), insbesondere einer Füllmaschine oder einem Kutter mit Lebensmitteln, umfassend:
- einen Behälter (3) zur Aufnahme des Lebensmittels,
- eine Hebeeinrichtung (2), über die der Behälter (3) nach oben verfahrbar ist und einen Antrieb (7) für die Hebeeinrichtung (2),
eine Messeinrichtung (12, 14) zum Erfassen der Lebensmittelmenge im Behälter (3), **dadurch gekennzeichnet, dass**
die Vorrichtung eine Steuereinrichtung (10) umfasst, die derart ausgelegt ist, dass die Leistung des Antriebs (7) in Abhängigkeit der erfassten Lebensmittelmenge eingestellt wird, wobei mit steigender Masse des Lebensmittels im Behälter (3) die Leistung des Antriebs (7) steigt.

2. Vorrichtung nach Anspruch 1, **dadurch gekennzeichnet, dass** die Messeinrichtung (12, 14) die Masse des Lebensmittels oder einen entsprechenden Wert, insbesondere die Hublast oder den Füllstand ermittelt und insbesondere einen Gewichtssensor und/oder Drucksensor (12) und/oder eine Strommesseinrichtung für den elektrischen Antrieb und/oder Füllstandssensor (14) und/oder Positionssensor für den Behälter (3) umfasst.

3. Vorrichtung nach mindestens einem der Ansprüche 1 oder 2, **dadurch gekennzeichnet, dass** die Hebeeinrichtung (2) eine hydraulische Hebeeinrichtung umfasst und der Antrieb (7) eine Hydraulikpumpe ist, deren Leistung in Abhängigkeit der Lebensmittelmenge verstellbar ist, und insbesondere die Geschwindigkeit der Hebeeinrichtung (2) über eine Drosseleinrichtung (9) einstellbar ist.

4. Vorrichtung nach mindestens einem der vorhergehenden Ansprüche, **dadurch gekennzeichnet, dass** die Vorrichtung eine Einrichtung zur Kollisionserkennung (20) aufweist, die eine Messwertänderung ΔS1 der Messeinrichtung oder eine Abweichung ΔS1 eines Messwertes von einem Sollwert erfasst und in Abhängigkeit der Messwertänderung oder Abweichung ΔS1 bestimmt, ob eine Kollision stattgefunden hat, und im Falle einer Kollision insbesondere die Hebeeinrichtung stoppt und/oder um eine bestimmte Strecke zurückfährt.

5. Vorrichtung nach mindestens einem der Ansprüche 1 bis 4, **dadurch gekennzeichnet, dass** der Aufnahmebereich (4) der Lebensmittel verarbeitenden Maschine (11), insbesondere der Fülltrichter (4) mindestens einen Füllstandssensor (13) aufweist.

6. Vorrichtung nach mindestens Anspruch 5, **dadurch gekennzeichnet, dass** eine Steuereinrichtung (10) derart ausgelegt ist, dass in Abhängigkeit des Füllstands im Aufnahmebereich (4) und der erfassten Lebensmittelmenge der Zeitpunkt bestimmbar ist, wann der Behälter (3) entleert werden soll.

7. Vorrichtung nach mindestens einem der Ansprüche 1 bis 6, **dadurch gekennzeichnet, dass** die Steuereinrichtung (10) derart ausgelegt ist, dass die Geschwindigkeit der Hebeeinrichtung (2) veränderbar ist und insbesondere bestimmte Bewegungsgeschwindigkeitsprofile einstellbar und insbesondere in einem Speicher ablegbar sind.

8. Verfahren zum Beschicken einer Lebensmittel verarbeitenden Maschine (11) mit einem Behälter zur Aufnahme des Lebensmittels, insbesondere einer Füllmaschine oder eines Kutters mit Lebensmitteln,
wobei der befüllte Behälter (3) über eine Hebeeinrichtung (2) nach oben verfahren und entleert wird und die Lebensmittelmenge im Behälter (3) erfasst wird, **dadurch gekennzeichnet, dass**
die Leistung des Antriebs (7) der Hebeeinrichtung (2) in Abhängigkeit der erfassten Lebensmittelmenge geändert wird, wobei mit steigender Masse des Lebensmittels im Behälter (3) die Leistung des Antriebs (7) steigt.

9. Verfahren nach Anspruch 8, **dadurch gekennzeichnet, dass** die Masse des Lebensmittels oder ein entsprechender Wert, insbesondere die Hublast und/oder der Füllstand im Behälter (3) erfasst werden.

10. Verfahren nach einem der Ansprüche 8 oder 9, **dadurch gekennzeichnet, dass** eine Messwertänderung ΔS1 der Messeinrichtung (2) oder die Abweichung ΔS1 eines Messwerts von einem Sollwert erfasst wird und in Abhängigkeit der Messwertänderung oder Abweichung ΔS1 bestimmt wird, ob eine Kollision stattgefunden hat, wobei die Hebeeinrichtung beim Feststellen einer Kollision die Hebeeinrichtung stoppt und/oder um eine bestimmte Strecke zurückfährt.

11. Verfahren nach mindestens einem der Ansprüche 8 bis 10, **dadurch gekennzeichnet, dass** im Aufnahmebereich (4) der Lebensmittel verarbeitenden Maschine (11), insbesondere im Fülltrichter (4) der Füllstand bestimmt wird, und dass in Abhängigkeit des Füllstands im Aufnahmebereich und der erfassten Lebensmittelmenge der Zeitpunkt bestimmt wird, wann der Brätwagen entleert werden soll.

12. Verfahren nach mindestens einem der Ansprüche 8 bis 11, **dadurch gekennzeichnet, dass** der Behälter (3) mit einer sich ändernden Geschwindigkeit angehoben und gesenkt wird, wobei insbesondere ein vorbestimmtes Bewegungsgeschwindigkeitsprofil durchfahren wird und/oder der Behälter mit einer sich ändernden Leistung angehoben und gesenkt wird, wobei insbesondere ein bestimmtes Leistungsprofil durchfahren wird.

13. Verfahren nach mindestens Anspruch 11, **dadurch gekennzeichnet, dass** die Zeitdauer für das Hochfahren der Hebeeinrichtung in eine Entleerposition gespeichert ist und der Zeitpunkt des Beginns der Hubbewegung des Behälters (3) von der Steuereinrichtung derart bestimmt wird, dass der Behälter (3) zum frühestmöglichen Zeitpunkt entleert werden kann, und insbesondere der Beginn der Hubbewegung zeitlich vorausschauend so von der Steuerung eingeleitet wird, dass wenn der Behälter in seiner Entleerposition ist, entleert werden kann.

14. Verfahren nach mindestens einem der Ansprüche 8 bis 13, **dadurch gekennzeichnet, dass** nach dem Entleeren des Behälters (3) von der Messeinrichtung bestimmt wird ob der Behälter vollständig entleert ist, und wenn bestimmt wurde, dass der Behälter noch nicht vollständig entleert ist, entweder der Einkippvorgang der Hebeeinrichtung zeitlich verlängert wird und/oder ein neuer Einkippvorgang eingeleitet wird und/oder eine Rüttelbewegung durch mehrfaches Fahren des Behälters gegen einen Endanschlag erfolgt.

15. Verfahren nach mindestens einem der Ansprüche 8 bis 13, **dadurch gekennzeichnet, dass** die Abwärtsbewegung des Behälters (3) automatisch von der Steuerung (10) nach vollständiger Entleerung des Behälters (3) eingeleitet wird oder von einem Bediener mit oder ohne Totmannsteuerung eingeleitet wird, und insbesondere die Leistung bei der Abwärtsbewegung kleiner oder gleich ist als bei der Aufwärtsbewegung.

## Claims

1. Device for loading a food processing machine (11), in particular a filling machine or a cutter, with food, comprising:
a container (3) for receiving the food, a lifting means (2) by which the container (3) can be driven upwards, and a drive (7) for the lifting means (2), measuring means (12, 14) for detecting the amount of food in the container (3) **characterized in that** the device comprises a control system (10) which is designed such that the power of the drive (7) is adjusted depending on the detected amount of food, wherein as the mass of the food in the container (3) increases, the power of the drive (7) increases.

2. Device according to claim 1 , **characterized in that** the measuring means (12, 14) detects the mass of the food or a corresponding value, in particular the load or the filling level, and in particular comprises a weight sensor and/or a pressure sensor (12) and/or a current meter for the electric drive and/or level sensor (14) and/or positioning sensor for the container (3).

3. Device according to at least one of claims 1 to 2, **characterized in that** the lifting means (2) comprises a hydraulic lifting means and the drive (7) is a hydraulic pump whose flow rate can be adjusted depending on the amount of food, and in particular the speed of the lifting means (2) can be adjusted via a throttle means (9).

4. Device according to at least one of the preceding claims, **characterized in that** the device comprises an apparatus for collision detection (20) which detects a change of the measured values ΔS1 of the measuring means or a deviation ΔS1 of a measured value from a set value and determines, depending on the change of the measured values or the deviation ΔS1, whether a collision occurred, and in case of a collision, in particular stops the lifting means and/or drives it back by a certain distance.

5. Device at least according to one of claims 1 to 4, **characterized in that** the receiving region (4) of the food processing machine (11), in particular the feed hopper (4), comprises at least one level sensor (13).

6. Device according to at least one of claims 1 to 5, **characterized in that** a control system (10) is designed such that, depending on the filling level in the receiving region (4) and the detected amount of food, the point in time for emptying the container (3) can be determined.

7. Method according to at least one of claims 1 to 6, **characterized in that** the control system (10) is designed such that the speed of the lifting means (2) can be varied and in particular certain movement speed profiles can be adjusted and in particular stored in a memory.

8. Method of loading a food processing machine (11), with a container for receiving the food, in particular a filling machine or a cutter, wherein the filled container (3) is driven upwards by a lifting means (2) and emptied and the amount of food in the container (3) is detected, **characterized in that** the power of the drive (7) of the lifting means (2) is changed depending on the detected amount of food, wherein as the mass of the food in the container (3) increases, the power of the drive (7) increases.

9. Method according to claim 8, **characterized in that** the mass of the food or a corresponding value, in particular the load and/or the filling level in the container (3), are detected.

10. Method according to one of claims 8 or 9, **characterized in that** a change of a measured value ΔS1 of the measuring means (2) or the deviation ΔS1 of a measured value from a set value is detected, and it is determined depending on the change of the measured value or the deviation ΔS1, whether a collision took place, wherein the lifting means stops and/or drives backwards by a certain distance if a collision is determined.

11. Method according to at least one of claims 8 to 10, **characterized in that** in the receiving region (4) of the food processing machine (11), in particular in the feed hopper (4), the filling level is determined, and that depending on the filling level in the receiving region and the detected amount of food, the point in time for emptying the sausage meat trolley is determined.

12. Method according to at least one of claims 8 to 11, **characterized in that** the container (3) is lifted and lowered at varying speeds, wherein in particular a predetermined movement speed profile is followed, and/or the container is lifted and lowered at varying powers, wherein in particular a certain power profile is followed.

13. Method according to at least claim 11, **characterized in that** the duration for the upward drive of the lifting means to an emptying position is stored and the point in time of the beginning of the lifting movement of the container (3) is determined by the control system such that the container (3) can be emptied at the earliest possible point in time, and in particular the start of the lifting movement is initiated anticipatorily by the control system such that, when the container is in its emptying position, it can be emptied.

14. Method according to at least one of claims 8 to 13, **characterized in that** after the emptying of the container (3), the measuring means determines whether the container is completely emptied, and if it was determined that the container is not yet completely emptied, either the tipping operation of the lifting means is extended in time, and/or a new tipping operation is initiated, and/or a shaking motion is effected by the container driving against a limit stop several times.

15. Method according to at least one of claims 8 to 13, **characterized in that** the downward movement of the container (3) is automatically initiated by the control system (10) after the container has been completely emptied, or is initiated by an operator with or without dead man's control, and in particular the power of the downward movement is smaller than or equal to that in the upward movement.

## Revendications

1. Installation destinée à alimenter une machine de traitement de produits alimentaires (11), et plus particulièrement une machine de remplissage ou un cutter, en produits alimentaires ; cette installation comprend :
- un récipient (3) permettant de recevoir le produit alimentaire,
- un dispositif de levage (2), par le biais duquel (3) le récipient est déplaçable vers le haut, et un entraînement (7) pour le dispositif de levage (2),
- un dispositif de mesure (12, 14) permettant de mesurer la quantité de produit alimentaire dans le récipient (3),
**caractérisée en ce que**
l'installation comprend un dispositif de commande (10) qui est conçu de telle manière que la puissance de l'entraînement (7) est réglée en fonction de la quantité de produit alimentaire mesurée, la puissance de l'entraînement (7) augmentant avec la masse du produit alimentaire dans le récipient (3).

2. Installation, conformément à la revendication 1, **caractérisée en ce que** le dispositif de mesure (12, 14) détermine la masse du produit alimentaire ou une valeur correspondante, en particulier la charge de levage ou le niveau de remplissage, et **en ce qu'**il comprend en particulier un capteur de poids et/ou un capteur de pression(12) et/ou un dispositif de mesure du courant électrique pour l'entraînement électrique et/ou un capteur de niveau de remplissage (14) et/ou un capteur de position pour le récipient (3).

3. Installation, conformément à l'une des revendications 1 ou 2, **caractérisée en ce que** le dispositif de levage (2) comprend un dispositif de levage hydraulique et que l'entraînement (7) est une pompe hydraulique, dont la puissance est réglable en fonction de la quantité de produit alimentaire, et qu'en particulier la vitesse du dispositif de levage (2) est réglable par le biais d'un dispositif d'étranglement (9).

4. Installation, conformément à au moins une des revendications précédentes, **caractérisée en ce que** l'installation présente un dispositif de détection de collision (20) qui enregistre une modification de la valeur de mesure ΔS1 du dispositif de mesure ou un écart ΔS1 d'une valeur de mesure par rapport à une valeur de consigne, qui détermine, en fonction de la modification de la valeur de mesure ou de l'écart ΔS1, si une collision a eu lieu, et qui, en cas de collision, stoppe en particulier le dispositif de levage et/ou le recule sur une distance prédéfinie.

5. Installation, conformément à au moins une des revendications 1 à 4, **caractérisée en ce que** la zone de réception (4) de la machine de traitement de produits alimentaires (11), et plus particulièrement la trémie de remplissage (4), présente au moins un capteur de niveau de remplissage (13).

6. Installation, conformément au moins à la revendication 5, **caractérisée en ce qu'**un dispositif de commande (10) est configuré de telle manière qu'il est possible de déterminer, en fonction du niveau de remplissage dans la zone de réception (4) et de la quantité de produit alimentaire mesurée, le moment auquel le récipient (3) doit être vidé.

7. Installation, conformément à au moins une des revendications 1 à 6, **caractérisée en ce que** le dispositif de commande (10) est configuré de telle manière que la vitesse du dispositif de levage (2) est modifiable et qu'en particulier certains profils de vitesse de déplacement sont réglables et peuvent être en particulier enregistrés dans une mémoire.

8. Procédé permettant, au moyen d'un récipient permettant de recevoir un produit alimentaire, d'alimenter une machine de traitement de produits alimentaires (11), et plus particulièrement une machine de remplissage ou un cutter, en produits alimentaires, le récipient rempli (3) étant déplacé vers le haut - par le biais d'un dispositif de levage (2) - et vidé, et la quantité de produit alimentaire étant mesurée dans le récipient (3) ; ce procédé est **caractérisé en ce que** la puissance de l'entraînement (7) du dispositif de levage (2) est modifiée en fonction de la quantité de produit alimentaire mesurée, la puissance de l'entraînement (7) augmentant avec la masse du produit alimentaire dans le récipient (3).

9. Procédé, conformément à la revendication 8, **caractérisé en ce que** la masse du produit alimentaire ou une valeur correspondante, et plus particulièrement la charge de levage et/ou le niveau de remplissage dans le récipient (3) sont mesurés.

10. Procédé, conformément à l'une des revendications 8 ou 9, **caractérisé en ce qu'**une modification de la valeur de mesure ΔS1 du dispositif de mesure (2) ou l'écart ΔS1 d'une valeur de mesure par rapport à une valeur de consigne sont enregistrés, et il est déterminé en fonction de la modification de la valeur de mesure ou de l'écart ΔS1 si une collision a eu lieu ; si une collision est détectée, le dispositif de levage est stoppé et/ou reculé sur une distance prédéfinie.

11. Procédé, conformément à au moins une des revendications 8 à 10, **caractérisé en ce que** le niveau de remplissage est déterminé dans la zone de réception (4) de la machine de traitement de produits alimentaires (11), et plus particulièrement dans la trémie d'alimentation (4), et qu'il est possible de déterminer le moment auquel le chariot de chair à farcir doit être vidé, en fonction du niveau de remplissage dans la zone de réception et de la quantité de produit alimentaire mesurée.

12. Procédé, conformément à au moins une des revendications 8 à 11, **caractérisé en ce que** le récipient (3) est levé et baissé avec une vitesse variable, un profil de vitesse de déplacement prédéfini étant exécuté en particulier et/ou le récipient étant levé et baissé avec une puissance variable, un profil de puissance prédéfini étant alors exécuté en particulier.

13. Procédé, conformément au moins à la revendication 11, **caractérisé en ce que** la durée nécessaire au levage du dispositif de levage dans une position de vidage est mémorisée et **en ce que** le moment du début du mouvement de levage du récipient (3) est déterminé de telle manière par le dispositif de commande que le récipient (3) puisse être vidé le plus tôt possible, et qu'en particulier le début du mouvement de levage puisse être amorcé de façon anticipée par la commande, de manière à ce que le récipient puisse être vidé lorsqu'il se trouve dans la position de vidage.

14. Procédé, conformément à au moins une des revendications 8 à 13, **caractérisé en ce que** le dispositif de mesure détermine, après le vidage du récipient (3), si le récipient est entièrement vidé ; s'il a été déterminé que le récipient n'est pas encore entièrement vidé, le processus de basculement du dispositif de levage est prolongé dans le temps et/ou un nouveau processus de basculement est amorcé et/ou un mouvement d'agitation est exécuté en déplaçant à plusieurs reprises le récipient contre une butée de fin de course.

15. Procédé, conformément à au moins une des revendications 8 à 13, **caractérisé en ce que** le mouvement de descente du récipient (3) est amorcé automatiquement par la commande (10), une fois le récipient (3) entièrement vidé, ou par un opérateur avec ou sans commande homme-mort, et **en ce que**, en particulier, la puissance lors du mouvement de descente est inférieure ou égale à celle du mouvement de montée.
